Europäisches Patentamt

European Patent Office

Office européen des brevets

(11) Numéro de publication: **0 419 328 A1**

# DEMANDE DE BREVET EUROPEEN

(21) Numéro de dépôt: **90402534.3**

(22) Date de dépôt: **14.09.90**

(51) Int. Cl.5: **B60S 1/38**

(30) Priorité: **22.09.89 FR 8912465**

(43) Date de publication de la demande:
**27.03.91 Bulletin 91/13**

(84) Etats contractants désignés:
**DE ES GB IT**

(71) Demandeur: **VALEO SYSTEMES D'ESSUYAGE**
**11, rue Faraday**
**F-78180 Montigny-Le-Bretonneux(FR)**

(72) Inventeur: **Maubray, Daniel**
**16, Boulevard Rodin**
**F-92130 Issy-Les-Moulineaux(FR)**

(74) Mandataire: **Gamonal, Didier**
**Société VALEO Service Propriété**
**Industrielle 30, rue Blanqui**
**F-93406 Saint Ouen(FR)**

(54) Déflecteur d'air à parties mobiles pour dispositif d'essuie-glace, notamment de véhicule automobile.

(57) Dans un déflecteur pour dispositif d'essuie-glace comportant un bras (2) portant à articulation un balai (1), ledit déflecteur est porté par au moins un des éléments (1,2) du dispositif de manière à dévier les flux d'air.

Selon l'invention le déflecteur (19) présente une partie principale (28) portée par au moins un des éléments (1,2) du dispositif d'essuie-glace et au moins une partie d'extrémité latérale (29,30) mobile par rapport à ladite partie principale (28).

Fig.1

La présente invention se rapporte à un déflecteur d'air à parties mobiles pour dispositif d'essuie-glace notamment de véhicule automobile.

Un déflecteur d'air est habituellement utilisé en liaison avec un dispositif d'essuie-glace, constitué généralement d'un bras d'essuie-glace portant un balai d'essuie-glace, pour dévier les flux d'air frappant ledit balai lorsque le véhicule portant ledit dispositif est en mouvement à grande vitesse et cela pour éviter le décollement dudit balai sous l'effet des forces aérodynamiques créées par les flux d'air.

Pour cela un tel déflecteur doit avoir son bord libre dirigé vers la surface à essuyer, en général le pare-brise d'un véhicule automobile, le plus près possible de ladite surface de manière à réduire au minimum l'espace entre ladite surface à essuyer et ledit bord du déflecteur de manière à éviter que les flux d'air puissent pénétrer dans cet espace en risquant de créer une force de soulèvement sur ledit déflecteur tendant à soulever par son intermédiaire le balai d'essuie-glace auquel il peut être lié.

Cependant une telle proximité du bord du déflecteur crée un problème non négligeable dans le sens où les pare-brises actuels ont une grande courbure et que cette courbure évolue dans le sens du balayage du dispositif d'essuie-glace, c'est-à-dire d'un bord latéral du pare-brise vers sa partie médiane.

Une solution de compromis a permis de déboucher sur un déflecteur permettant de présenter un bord libre de courbure correspondant à la courbure moyenne du pare-brise du véhicule.

Cette solution présente néanmoins des inconvénients, lors du mouvement du balayage du dispositif d'essuie-glace, et cela dans les courses extremes de balayage.

En effet, les parties extrêmes latérales du déflecteur se trouvent, dans une des courses extrêmes, avec des portions de son bord situées à grande distance de la surface à essuyer, ce qui autorise la pénétration d'une grande quantité de flux d'air à l'arrière du déflecteur et crée une force aérodynamique visant à soulever le balai, et, dans l'autre des courses extrêmes, lesdites portions dudit déflecteur se trouvent très rapprochés de la surface à essuyer et une simple variation du flux d'air venant balayer le déflecteur suffit pour que celui-ci vienne frotter sur ladite surface en endommageant celle-ci et en gênant à terme la bonne visibilité du conducteur.

La présente invention se propose de remédier aux inconvénients mentionnés ci-dessus en présentant un déflecteur d'air pour dispositif d'essuie-glace dont le bord libre dudit déflecteur situé en vis-à-vis de la surface à essuyer présente une courbure pouvant évoluer suivant la position dudit dispositif le long de sa course d'essuyage.

Suivant l'invention, un déflecteur d'air pour dispositif d'essuie-glace constitué de deux éléments, l'un des éléments étant un bras d'essuie-glace portant l'autre des éléments formé par un balai d'essuie-glace, ledit déflecteur étant porté par au moins l'un des éléments, est caractérisé en ce que le déflecteur présente une partie principale portée par au moins un des éléments du dispositif d'essuie-glace et au moins une partie d'extrémité mobile par rapport à ladite partie principale du déflecteur.

Cette construction a l'avantage de présenter un déflecteur dont le bord disposé en vis-à-vis du pare-brise est adapté à épouser sensiblement la courbure de celui-ci et cela quelle que soit cette courbure et quelle que soit également la position du dispositif d'essuie-glace dans son mouvement de balayage.

Les autres caractéristiques et avantages de l'invention ressortiront de la description qui va suivre, donnée à titre d'exemple, et en se référant aux desssins annexés sur lesquels :
- la figure 1 est une vue frontale montrant le déflecteur suivant l'invention ;
- la figure 2 est une vue en coupe partielle selon la ligne AA de la figure 1 ;
- la figure 3 est une vue en coupe partielle selon la ligne BB de la figure 1.

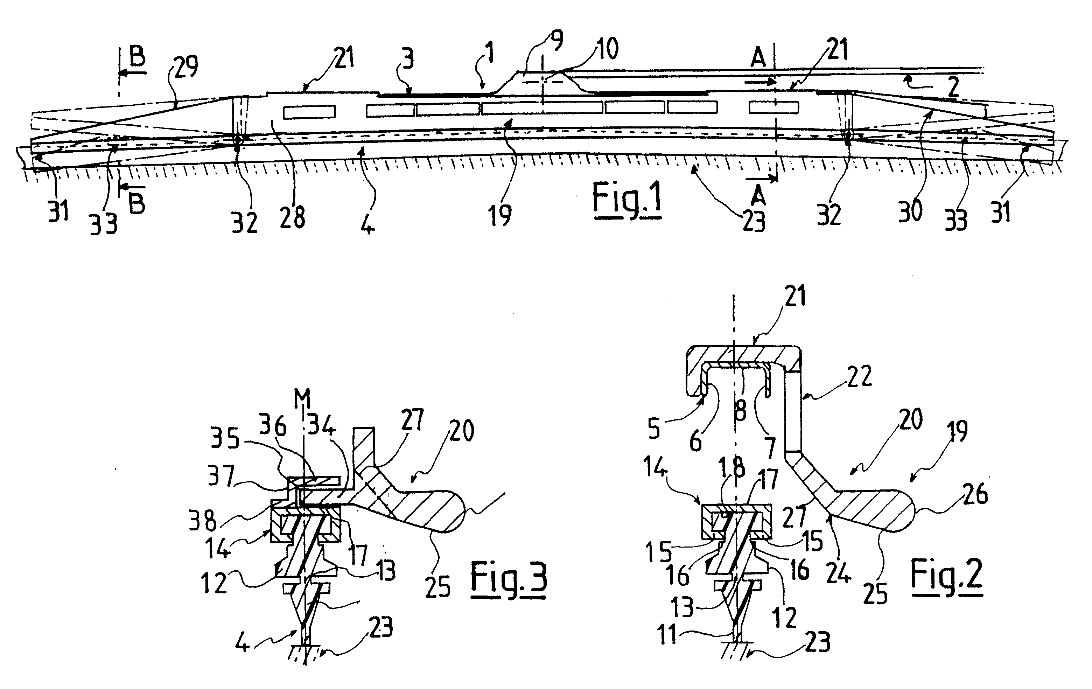

En se référant à la figure 1, il est montré un dispositif d'essuie-glace constitué d'un balai d'essuie-glace 1 porté à articulation par un bras d'essuie-glace 2.

Le balai d'essuie-glace 1 comporte une monture porteuse 3 d'une lame d'essuie-glace 4.

Comme mieux visible sur la figure 2, la monture porteuse 3 est constituée, de manière connue en soi, d'un étrier principal 5, allongé et légèrement cintré, ledit étrier présentant une section en U à flancs sensiblement parallèlles 6,7 et perpendiculaires à la l'ame 8 du U, cet étrier principal pouvant porter directement la lame 4 ou être muni de systèmes de palonniers intermédiaires portant ladite lame et articulés sur ledit étrier.

Egalement de manière connue en soi, l'étrier principal 5 présente une ouverture, en forme de fenêtre (non représentée), délimitée latéralement par deux ailes 9, dans le prolongement des flancs 6 et 7 du U, ces ailes 9 étant reliées entre elles par un axe de pivotement 10 permettant le montage de la monture porteuse sur une partie femelle d'articulation, du type connu, portée par l'extrémité du bras d'essuie-glace 2, comme représenté sur la figure 1.

En se référant à la figure 2, la lame d'essuie-glace 4 se compose d'une lèvre d'essuyage 11 raccordée à une embase 12 par une zone charnière 13. L'embase 12 est apte à recevoir une tringle plastique 14, de section générale rectangulaire creuse, ladite tringle présentant des griffes 15 pénétrant dans des rainures longitudinales 16 que présente ladite embase et un dos 17 s'appuyant sur le dos 18 de ladite embase, dos étant situé à l'opposé de la lèvre d'essuyage 11.

Bien entendu, la tringle 14 peut être remplacée par une lame, métallique par exemple, disposée dans chaque rainure 16 et tout au long de celle-ci en laissant le dos 18 de l'embase libre.

Pour la facilité de la suite de la description, il ne sera fait mention que d'une lame d'essuyage en général' celle-ci pouvant porter soit une tringle élastique 14, soit des lames élastiques dans les rainures 16 de l'embase.

Le balai 1 est équipé d'un déflecteur d'air 19 porté dans l'exemple représenté, par ledit balai, mais il peut être envisagé, sans pour cela sortir du cadre de l'invention, que ledit déflecteur soit porté par le bras d'essuie-glace 2.

En outre, il peut être envisagé que ce déflecteur soit porté de manière à pouvoir se déplacer dans son plan, comme mieux décrit dans la demande de brevet français N°. 89 10 041 déposée le 26 juillet 1989 par la Demanderesse.

Le type de déflecteur servant à la suite de la description, donné à titre d'exemple, est décrit plus en détail dans la demande de brevet français N° 87 13 770 déposée le 6 octobre 1987 par la demanderesse, mais tout type de déflecteur d'air peut être monté sur le dispositif d'essuie-glace.

Le déflecteur d'air 19, décrit pour la compréhension de la description, qu.à partir de ses grandes lignes présente une partie profilée 20, des moyens d'accrochage 21, ici sur la monture porteuse 3, et des moyens de liaison 22 entre la partie profilée 20 et les moyens d'accrochage 21, ces moyens de liaisons s'étendant en direction d'une surface à essuyer 23, notamment sur la face d'un pare-brise d'un véhicule automobile.

La partie profilée 20 a une forme sensiblement convexe tournée vers la surface à essuyer 23 et comporte sur sa surface interne 24 une première zone 25 sensiblement plane inclinée d'un certain angle par rapport à la surface 23 et s'étend depuis un bord libre avant 26 vers l'arrière c'est-à-dire vers les moyens de liaison 22, ledit bord 26 ayant une forme arrondie sensiblement semi-cylindrique.

Une seconde zone plane 27 fait suite à la première zone 25 en ayant un angle par rapport à la surface à essuyer plus grand que l'angle de la première zone de telle sorte que le profil de la surface interne de la partie profilée 20 soit celui d'un dièdre convexe tourné vers la surface à essuyer 23.

Cette partie profilée 20, et plus particulièrement le bord 26 est disposé à distance de la surface à essuyer 23 de façon à réduire la distance entre la surface 23 et ledit bord de manière à empêcher la création d'une force aérodynamique sur la face interne de la partie profilée 20 constituée par les première et deuxième zones 25 et 27 et comme cela est mieux décrit dans la demande de brevet mentionnée ci-dessus.

En se référant à la figure 1, le déflecteur 19 présente une partie principale 28 portée par la monture porteuse 3 grâce aux moyens d'accrochage 21 et au moins une partie d'extrémités, ici deux 29,30, mobiles par rapport à la partie principale 28 dudit déflecteur, ces parties d'extrémités étant situées respectivement à gauche et à droite de la partie principale 28.

Les parties d'extrémités 29,30 comportent également comme déjà décrit et comme mieux visible sur la figure 3 une partie profilée 20 portant une première zone 25 et une deuxième zone 27, cette deuxième zone 27 se prolongeant dans une direction sensiblement orthogonale à la surface à essuyer par les moyens de liaison 22, non raccordés à des moyens d'accrochage, dont la hauteur va en s'amenuisant à partir de la partie principale 28 du déflecteur 19 jusqu'au bord extreme latéral 31 dudit déflecteur.

De préférence chaque partie d'extrémités 29,30 est mobile en rotation autour d'un axe 32, axe pouvant être porté par la partie profilée 20 du déflecteur 19.

Bien entendu cet axe d'articulation peut être remplacé par tout moyen permettant un déplacement en rotation tel que par un exemple une liaison élastique du type élastomère permettant un déplacement à rotation de la partie d'extrémités 29,30 par rapport à la partie principale 28.

De plus, les parties d'extrémités 29,30 sont soumises à l'action de moyens de commande 33 permettant leur déplacement en rotation.

Pour ce faire, ces moyens de commande en déplacement consistent en au moins un doigt rigide 34 issu de la zone 27 de la partie profilée 20 du déflecteur 19.

Ces doigts viennent prendre appui sur la lame d'essuie-glace 4, de préférence sur le dos 17 de la tringle élastique 14 ou comme précédemment mentionné directement sur le dos 18 de l'embase 12 de ladite lame.

Comme mieux visible sur la figure 3, les doigts 34 ont une direction sensiblement parallèle à la surface à essuyer 23 en ayant leurs extrémités libres 35 dirigées vers le balai d'essuie-glace 1 en étant situés légèrement au-delà du plan médian M de la lame d'essuie-glace 4.

Il peut être prévu aussi que l'extrémité libre 35 du doigt de commande 34 soit disposée avec jeu entre le dos 17 de la tringle 14 et une paroi 36 disposée à distance et parallèlement audit dos.

Cette paroi 36 est reliée au dos par un voile 37 porté par une semelle 38 fixée sur le dos 17 de la tringle 14 par tous moyens appropriés ou il peut être envisagé que la tringle 14, la paroi 16 et le voile 37 soient d'une seule pièce par exemple moulée.

Ainsi, le doigt 34 est actionné soit par le dos 17 de la tringle dans une première de direction, à l'opposé du pare-brise, soit par la paroi 36 dans une direction allant vers le pare-brise.

Le rôle et le fonctionnement du déflecteur selon l'invention muni de parties d'extrémités 29,30 sont explicités maintenant à partir de la figure 1.

Comme représenté sur cette figure la surface à essuyer 23 présente une courbure, qui lors de l'appui de la lame d'essuie-glace 4 sur cette surface, sera épousée par ladite lame.

Lors de l'appui de la lame sur la surface à essuyer 23, la lame 4 et plus particulièrement les zones latérales d'extrémités de ladite lame vont épouser cette courbure de par leur montage sur l'étrier principal 3, qui peut comporter, de manière connue en soi, une multiplicité d'étriers secondaires et/ou de palonniers permettant d'épouser cette courbure.

Pendant ce mouvement les doigts 34 sont commandés par la tringle 14 ou la paroi 36 et de par l'articulation à rotation 32 entre les parties d'extrémités 29,30 disposées au voisinage de la zone d'extrémité latérale de la lame d'essuie-glace 4 et la partie principale 28 du déflecteur, lesdites parties d'extrémités 29,30 sont soumises à un mouvement de rotation autour de leur axe 32.

Lors du mouvement de balayage, la courbure de la surface à essuyer 23 venant à changer, les doigts de commande 34 sont commandés ainsi soit par le dos 17 de la tringle 14, soit par la paroi 36 précédemment décrite, de manière à avoir un débattement comme représenté en traits mixtes interrompus sur la figure 1 et cela de manière à conserver le même espace entre la surface à essuyer 23 et le bord 26 des parties d'extrémités mobiles 29,30.

La présente invention n'est pas limitée à l'exemple de réalisation décrit précédemment mais englobe évidemment toute variante.

## Revendications

1) Déflecteur d'air pour dispositif d'essuie-glace à deux éléments (1,2), l'un des éléments étant un bras d'essuie-glace (2) portant l'autre des éléments formé par un balai d'essuie-glace (1), ledit déflecteur étant porté par au moins l'un des éléments (1,2), caractérisé en ce que le déflecteur (19) présente une partie principale (28) portée par au moins un des éléments (1,2) du dispositif d'essuie-glace et au moins une partie d'extrémité latérale (29,30) mobile par rapport à ladite partie principale (28) du déflecteur (19).

2) Déflecteur d'air selon la revendication 1, caractérisé en ce que les parties d'extrémités (29,30) du déflecteur (19) sont mobiles en rotation par rapport à la partie principale (28) du déflecteur (19).

3) Déflecteur d'air selon l'une des revendications 1 ou 2, caractérisé en ce que les parties d'extrémités (29,30) sont articulées autour d'un axe (32) porté par le déflecteur (19).

4) Déflecteur d'air selon la revendication 3, caractérisé en ce que l'axe (32) est porté par une partie profilée (20) que présente le déflecteur (19).

5) Déflecteur d'air selon l'une des revendications précédentes, caractérisé en ce que les parties d'extrémités (29,30) sont soumises à l'action de moyens de commande (33).

6) Déflecteur d'air selon la revendication 5, caractérisé en ce que les moyens de commande (33) sont actionnés par la lame d'essuie-glace (4).

7) Déflecteur d'air selon la revendication 5, caractérisé en ce que les moyens de commande (33) sont actionnés par une paroi (36) portée par la lame (2).

8) Déflecteur d'air selon l'une des revendications 5 à 7, caractérisé en ce que les moyens de command (33) consistent en un doigts (34) issu du déflecteur (19).

Fig.1

Fig.2

Fig.3

**Office européen des brevets**

# RAPPORT DE RECHERCHE EUROPEENNE

Numéro de la demande

**EP 90 40 2534**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,Y | EP-A-0 280 149 (FIAT)<br>* page 2, ligne 35 - page 5, ligne 12; figures 1-3 *<br>– – – | 1-6,7,8 | B 60 S 1 38 |
| Y,A | GB-A-2 145 928 (CHAMPION SPARK PLUG EUROPE)<br>* le document en entier *<br>– – – | 7,8,1 | |
| Y,A | FR-A-2 594 083 (CHAMPION SPARK PLUG EUROPE)<br>* le document en entier *<br>– – – | 7,1-3,5-8 | |
| A | DE-A-2 839 587 (SWF)<br>* page 8, ligne 11 - page 10, ligne 37; figures 1-4 *<br>– – – – – | 1-3,5,6 | |

|  |  |  | DOMAINES TECHNIQUES RECHERCHES (Int. Cl.5) |
|---|---|---|---|
|  |  |  | B 60 S |

Le présent rapport de recherche a été établi pour toutes les revendications

| Lieu de la recherche | Date d'achèvement de la recherche | Examinateur |
|---|---|---|
| La Haye | 19 décembre 90 | VERLEYE J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant